(19) **Europäisches Patentamt**

**European Patent Office**

**Office européen des brevets**

(11) Veröffentlichungsnummer: **0 482 326 B1**

(12) **EUROPÄISCHE PATENTSCHRIFT**

(45) Veröffentlichungstag der Patentschrift: **05.07.95**

(51) Int. Cl.⁶: **G01N 9/24**, G01N 29/02

(21) Anmeldenummer: **91115033.2**

(22) Anmeldetag: **05.09.91**

(54) Ultraschall (US)-Dichtemesser zum Messen der spezifischen Dichte eines Fluid.

(30) Priorität: **28.09.90 DE 4030785**

(43) Veröffentlichungstag der Anmeldung:
**29.04.92 Patentblatt 92/18**

(45) Bekanntmachung des Hinweises auf die
Patenterteilung:
**05.07.95 Patentblatt 95/27**

(84) Benannte Vertragsstaaten:
**DE ES FR GB IT**

(56) Entgegenhaltungen:
**EP-A- 0 364 168**     **WO-A-84/04167**
**WO-A-87/02770**     **CA-A- 1 203 615**
**US-A- 3 359 788**     **US-A- 4 214 484**

(73) Patentinhaber: **SIEMENS AKTIENGESELL-
SCHAFT
Wittelsbacherplatz 2
D-80333 München (DE)**

(72) Erfinder: **Fischer, Bernhard, Dipl.-Phys.
Schyrenstrasse 11/2
W-8000 München 90 (DE)**
Erfinder: **Mágori, Valentin, Dipl.-Phys.
Limburgstrasse 17
W-8000 München 90 (DE)**
Erfinder: **von Jena, Alexander, Dr.
Oskar-von-Miller-Ring 29
W-8000 München 2 (DE)**

**Beschreibung**

Die vorliegende Erfindung betrifft einen Ultraschall (US)-Dichtemesser zum Messen der spezifischen Dichte eines Fluid, wobei der Dichtemesser als ein an einen Flüssigkeitskanal für die zu bewertende Flüssigkeit angeformter Meßkörper ausgebildet ist.

Die Dichte von Flüssigkeiten läßt sich mit Ultraschall nach dem Prinzip der Frontwellendetektion unter Laborbedingungen auf weniger als ±1 % genau bestimmen. Bei diesem Meßverfahren wird die Reflexion an der Grenzschicht Meßkörper-Fluid gemessen und über eine zusätzliche Messung mit Luft als Kontaktmedium der Reflexionkoeffizient $R := i_{ref}/i_O$ ($i_{ref}$: reflektierte Intensität, $i_O$: emittierte Intensität) bestimmt. Da die Reflexivität R bei senkrechtem Einfall nur Von den Größen "Dichte" und "Schallgeschwindigkeiten" abhängt, kann bei bekannten Materialparametern des Meßkörpers die Dichte des Fluid berechnet werden. Die Voraussetzung des senkrechten Einfalls ist nur bei der ersten Wellenfront weitgehend erfüllt. Zur Messung wird daher nur eine führende Halbschwingung herangezogen.

Für die Messung von $i_O$ kommt für den praktischen Einsatz keine Hilfsmessung in Frage. Andererseits ist die begleitende Messung von $i_O$ notwendig, um Änderungen der Ultraschall-Abstrahlung z.B. durch Temperatureinflüsse, Luftfeuchte, Alterung oder Depolarisation der Piezokeramik kompensieren zu können. Die deshalb notwendige Online-Referenzmessung kann z.B. über eine Inhomogenität in dem Vollmaterial zwischen Piezoscheibe und Fluid erfolgen. Wird als Vollmaterial Edelstahl verwendet, wie es für die industrielle Durchflußmessung vorgeschrieben ist, so entstehen unabhängig vom Prinzip der Zusatzreflexion vagabundierende Echos, die für einige Zeit stören können. Das Ziel muß daher sein, die Amplitude, die Anzahl und die zeitliche Ausdehnung vagabundierender Impulse möglichst klein zu halten.

Die Geometrie des Meßkörpers hat einen großen Einfluß darauf, wie sich die Sendeenergie auf das auszuwertende führende Echo und die störenden vagabundierenden Echos verteilt. Hierzu wurden bereits Körper mit verschiedenen Quer- und Längsschnitten untersucht. Die beste bisher gefundene Geometrie stellt eine Kegelstumpfform dar. Der Unterschied z.B. im Vergleich zu einer Zylindergestalt ist beträchtlich. Der erste abgesetzte Impuls ist bei einem Zylinder nicht einmal derjenige mit der größten Amplitude. Zudem sind die vagabundierenden Echos deutlich ausgeprägt. Beim Kegelstumpf dagegen zeigt der führende Impuls keine Substruktur. Allerdings ist bei Edelstahl trotzdem noch ein Einfluß der vagabundierenden Echos nachweisbar. Die notwendige Genauigkeit der Amplitudenmessung für die Dichtemessung liegt bei ca. 0.1%, so daß auch vagabundierende Echos im Promillebereich die Dichtemessung stören. Da es trotz der erreichten Verbesserungen nicht möglich ist, durch eine vergrößerte Meßkörperlänge die Laufzeiten der Primärsignale in die Größenordnung der Abklingzeiten von mehrfach reflektiertem Schall zu bringen, müssen die Impulszüge der Referenz- und der Kontaktmessung zeitlich ineinander geschachtelt werden.

Für eine Referenzmessung muß gefordert werden, daß die Änderung der Reflektivität des Hilfsreflektors unter sämtlichen Betriebsbedingungen kleiner ist als 0.1 %. Da der Übergang Meßkörper - Luft hierfür die besten Voraussetzungen bietet, kommt technisch eine partielle Reflexion an einer konstruktiv eingefügten Inhomogenität mit Luftkontakt in Frage. Mögliche Ausführungsformen hierfür sind z.B. eine äußere Ringnut oder eine Bohrung mit zylindrischem oder rechteckigem Querschnitt. Form und räumliche Ausdehnung derartiger Partialreflektoren sind so zu wählen, daß die Amplituden von Referenz- und Meßimpuls bei einer Messung an Luft in einem für die Störunterdrückung und die Auswertbarkeit günstigen Verhältnis stehen.

Vorteile dieses Vorgehens sind die unveränderte Bauhöhe des nur in Kontur oder Querschnitt veränderten Meßkörpers und die von den Betriebsbedingungen in hohem Maße unabhängige Reflektivität des Partialreflektors. Kritisch erscheint hingegen die Abhängigkeit des Referenzsignals von der örtlichen Verteilung der auf den räumlich eng lokalisierten Hilfsreflektor auffallenden Intensität. Da die Amplitudenmessung einen gewissen Mindestpegel verlangt, muß das empfangene Signal zumindest mit einigen Zyklen eingeschwungen sein. Wellenlängenabhängige Interferenzerscheinungen im Nahfeld können daher zu lokalen Intensitätsveränderungen führen, die das Referenzsignal verfälschen. Hierbei besteht der Zusammenhang einer um ca. 20 dB verstärkten Wirkung von Amplitudenfehlern auf die Genauigkeit der Dichtmessung.

Der vorliegenden Erfindung liegt die Aufgabe zugrunde, einen Ultraschall-Dichtemesser zu schaffen, der bei einfachdem und kompaktem Aufbau eine drift-, temperatur- und materialalterungsunabhängige zuverlässige Dichtemessung eines Fluid gestattet.

Zur Lösung dieser Aufgabe wird ein Ultraschall-Dichtemesser der eingangs genannten Art vorgeschlagen, wobei erfindungsgemäß vorgesehen ist, daß der Meßkörper einen einzigen Ultraschallwellen-Sende/Empfangswandler in Form einer Piezobiegeschwingers enthält, der zur Erzeugung einer Ultraschallwellenkeule, die auf die Oberfläche des zu bewertende Fluid und auf eine Referenzgrenzschicht gerichtet ist, und zum Empfangen sowohl eines Referenzechos als auch eines Nutzechos dient, daß der Meßkörper im wesentlichen aus zwei kegelstumpfförmigen Teilen besteht, wobei der Piezobiegeschwinger mit einer seiner Flächen an einer ersten, vorzugsweise senkrecht zur Rotationsachse eines ersten Teils liegenden Kegelschnittfläche kleinen Durchmessers des Meßkörpers und mit einer anderen seiner Flächen an einer ersten, vorzugsweise senkrecht zur Rotationsachse eines zweiten Teils des Meßkörpers liegenden Kegelschnittfläche kleinen Durchmessers des Meßkörpers angeordnet ist, daß eine zweite, vorzugsweise senkrecht zur Rotationsachse des Meßkörpers liegende zweite Kegelschnittfläche großen Durchmessers des zweiten Teils auf das zu bewertende Fluid gerichtet ist, daß eine zweite, vorzugsweise senkrecht zur Rotationsachse des Meßkörpers liegende zweite Kegelschnittfläche großen Durchmessers des ersten Teils auf die umgebende Luft gerichtet ist, daß der erste Teil einer ersten Länge des Meßkörpers aus einem ersten Material und der dem Fluid zugewandte zweite Teil einer zweiten Länge des Meßkörpers aus einem zweiten Material besteht, daß die Grenzschicht zwischen dem ersten Material und der umgebenden Luft zur Erzeugung von Referenzechos dient und daß das Verhältnis der Längen so gewählt ist, daß die Referenzechos und die Nutzechos derart zeitlich getrennt auf die Oberfläche des Piezobiegeschwingers treffen, daß sie für einen Auswertevorgang unterscheidbar sind.

Vorteilhafte Weiterbildungen der Erfindung sind durch die in den Unteransprüchen angegebenen Merkmale gekennzeichnet.

Im folgenden wird die Erfindung anhand einer Figur im einzelnen beschrieben.

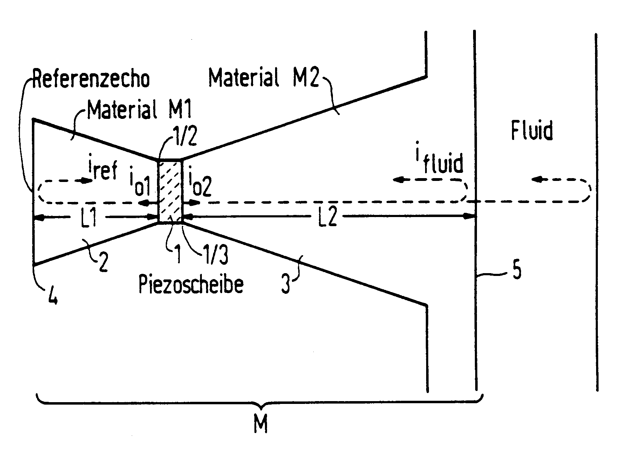

Die Figur zeigt einen Ultraschall (US)-Dichtemesser zum Messen der spezifischen Dichte eines Fluid, wobei der Dichtemesser als ein an einen Flüssigkeitskanal für die zu bewertende Flüssigkeit angeformter Meßkörper ausgebildet ist. Der Meßkörper M enthält einen einzigen Ultraschallwellen-Sende/Empfangswandler in Form eines Piezobiegeschwingers 1, der zur Erzeugung einer Ultraschallwellenkeule, die auf die Oberfläche des zu bewertenden Fluid und auf eine Referenzgrenzschicht gerichtet ist, und zum Empfangen sowohl eines Referenzechos als auch eines Nutzechos dient. Der Meßkörper M besteht im wesentlichen aus zwei kegelstumpfförmigen Teilen, wobei der Piezobiegeschwinger 1 mit einer ersten, vorzugsweise senkrecht zur Rotationsachse eines ersten Teils des Meßkörpers M liegenden Kegelschnittfläche 1/2 kleinen Durchmessers des Meßkörpers M und mit einer anderen seiner Flächen an einer ersten, vorzugsweise senkrecht zur Rotationsachse eines zweiten Teils 3 des Meßkörpers M liegenden Kegelschnittfläche 1/3 kleinen Durchmessers des Meßkörpers M angeordnet ist.

Eine zweite, vorzugsweise senkrecht zur Rotationsachse des Meßkörpers M liegende zweite Kegelschnittfläche 5 großen Durchmessers des zweiten Teils 3 ist auf das zu bewertende Fluid gerichtet. Eine zweite, vorzugsweise senkrecht zur Rotations des Meßkörpers M liegende zweite Kegelschnittfläche 4 großen Durchmessers des ersten Teils 2 ist auf die umgebende Luft gerichtet. Der erste Teil 2 einer ersten Länge L1 des Meßkörpers M besteht aus einem ersten Material M1, und der dem Fluid zugewandte zweite Teil 3 einer zweiten Länge L2 des Meßkörpers M besteht aus einem zweiten Material M2. Die Grenzschicht 4 zwischen dem ersten Material M1 und der umgebenden Luft dient zur Erzeugung von Referenzechos $i_{ref}$. Das Verhältnis der Längen L1, L2 ist so gewählt, daß die Referenzechos $i_{ref}$ und die Nutzechos $i_{fluid}$ derart zeitlich getrennt auf die Oberfläche des Piezobiegeschwingers treffen, daß sie für einen Auswertevorgang unterscheidbar sind.

Die Anordnung M1-P-M2 gemäß der Figur kann das Referenzecho gegen Luft messen. Diese Referenz hat den Vorteil, unter allen Umständen konstant und bekannt zu sein. Gegenüber der Partialreflexion an Luft ergibt sich noch der zusätzliche Vorteil, daß die Hilfsreflexion über den ganzen Querschnitt erfolgt. Nahfeldvariationen sind deshalb durch die flächige Erstreckung des Referenzreflektors auszumitteln. Die zeitliche Verkämmung von Referenz- und Fluidecho legt zwar die Stablänge fest, durch geeignete Form und Materialauswahl für M1 können jedoch annähernd gleich große Amplituden für Referenz- und Fluidecho eingestellt werden.

Die Piezokeramik muß an M1 und M2 durch Klebung mittels eines Industrieklebers angekoppelt sein. Für die Übergänge P/M1 und P/M2 ist hierbei keine Konstanz erforderlich, sondern nur Gleichlauf eventueller Änderungen. Die Vorteile der rückseitigen Referenzmessung liegen darin, daß die Referenz konstant und bekannt ist sowie daß für die Trennfläche nicht Konstanz sondern nur Gleichlauf der Reflektivität gefordert ist.

Das erste Material M1 kann aus einem dämpfenden Material bestehen, und das zweite Material M2 kann vorzugsweise aus Edelstahl bestehen. Die Kegelstumpfgeometrie des Meßkörpers M ist im Hinblick auf eine minimale Störechoerzeugung ausgelegt.

**Patentansprüche**

1. Ultraschall (US)-Dichtemesser zum Messen der spezifischen Dichte eines Fluid, wobei der Dichtemesser als ein an einen Flüssigkeitskanal für die zu bewertende Flüssigkeit angeformter Meßkörper ausgebildet ist, wobei weiter vorgesehen ist, daß der Meßkörper (M) einen einzigen Ultraschallwellen-Sende/Empfangswandler in Form eines Piezobiegeschwingers (1) enthält, der zur Erzeugung einer Ultraschallwellenkeule, die auf die Oberfläche des zu bewertenden Fluids und auf eine Referenzgrenzschicht gerichtet ist, und zum Empfangen sowohl eines Referenzechos als auch eines Nutzechos dient, daß der Meßkörper (M) im wesentlichen aus zwei kegelstumpfförmigen Teilen besteht, wobei der Piezobiegeschwinger (1) mit einer seiner Flächen an einer ersten, vorzugsweise senkrecht zur Rotationsachse des Meßkörpers (M) liegenden Kegelschnittfläche (1/2) kleinen Durchmessers eines ersten Teils (2) des Meßkörpers (M) und mit einer anderen seiner Flächen an einer ersten, vorzugsweise senkrecht zur Rotationsachse des Meßkörpers (M) liegenden Kegelschnittfläche (1/3) kleinen Durchmessers eines zweiten Teils (3) des Meßkörpers (M) angeordnet ist, daß eine zweite, vorzugsweise senkrecht zur Rotationsachse des Meßkörpers (M) liegende Kegelschnittfläche (5) großen Durchmessers des zweiten Teils (3) auf das zu bewertende Fluid gerichtet ist, daß eine zweite, vorzugsweise senkrecht zur Rotationsachse des Meßkörpers (M) liegende Kegelschnittfläche (4) großen Durchmessers des ersten Teils (2) auf die umgebende Luft gerichtet ist, daß der erste Teil (2) einer ersten Länge (L1) des Meßkörpers (M) aus einem ersten Material (M1) und der dem Fluid zugewandte zweite Teil (3) einer zweiten Länge (L2) des Meßkörpers (M) aus einem zweiten Material (M2) besteht, daß die Grenzschicht (4) zwischen dem ersten Material (M1) und der umgebenden Luft zur Erzeugung von Referenzechos ($i_{ref}$) dient und daß das Verhältnis der Längen (L1, L2) so gewählt ist, daß die Referenzechos ($i_{ref}$) und die Nutzechos ($i_{fluid}$) derart zeitlich getrennt auf die Oberfläche des Piezobiegeschwingers (1) treffen, daß sie für einen Auswertevorgang unterscheidbar sind.

2. Ultraschall (US)-Dichtemesser nach Anspruch 1, **dadurch gekennzeichnet**, daß das erste Material (M1) aus einem dämpfenden Material besteht.

3. Ultraschall (US)-Dichtemesser nach Anspruch 1 oder 2, **dadurch gekennzeichnet**, daß das zweite Material (M2) aus Edelstahl besteht.

4. Ultraschall (US)-Dichtemesser nach einem der Ansprüche 1 bis 5, **dadurch gekennzeichnet**, daß die Kegelstumpfgeometrie des Meßkörpers (M) im Hinblick auf eine minimale Störechoerzeugung ausgelegt ist.

5. Ultraschall (US)-Dichtemesser nach einem der Ansprüche 1 bis 5, **dadurch gekennzeichnet**, daß die drei Elemente des Meßkörper (M), nämlich der Piezobiegeschwinger (1), der erste Teil (2) und der zweite Teil (3) jeweils miteinander mittels eines Industrieklebers verbunden sind.

**Claims**

1. Ultrasonic (US) densitometer for measuring the specific density of a fluid, the densitometer being constructed as a measuring member integrally formed on a fluid channel for the fluid to be analysed, it being provided, furthermore, that the measuring member (M) includes a single transmitting/receiving transducer for ultrasonic waves in the form of a piezoelectric flexural resonator (1) which serves the purpose of generating a beam of ultrasonic waves which is directed onto the surface of the fluid to be analysed and onto a reference boundary layer, and of receiving both a reference echo and a useful echo, that the measuring member (M) essentially comprises two frustoconical parts, the piezoelectric flexural resonator (1) being arranged with one of its surfaces on a first surface (1/2) of a conic section of small diameter of a first part (2) of the measuring member (M), which surface is preferably situated perpendicular to the axis of rotation of the measuring member (M), and with another of its surfaces on a first surface (1/3) of a conic section of small diameter of a second part (3) of the measuring member (M), which surface is preferably situated perpendicular to the axis of rotation of the measuring member (M), in that a second surface (5) of a conic section of large diameter of the second part (3), which surface is preferably situated perpendicular to the axis of rotation of the measuring member (M), is directed onto the fluid to be analysed, that a second surface (4) of a conic section of large diameter of the first part (2), which surface is preferably situated perpendicular to the axis of rotation of the measuring member (M) is directed onto the ambient air, that the first part (2) of a first length (L1) of the measuring member (M) comprises a first material (M1) and the second part (3), facing the fluid, of a second length (L2) of the measuring member (M) comprises a second material (M2), that the boundary layer (4) between the first material (M1) and the ambient air serves the purpose of generating reference echoes ($i_{ref}$), and that the ratio of the lengths (L1, L2) is selected in such a way that the reference echoes ($i_{ref}$) and the useful echoes ($i_{fluid}$) impinge on the surface of the piezoelectric flexural resonator (1) in a temporally separate fashion in such a way that they can be distinguished for an analysing process.

2. Ultrasonic (US) densitometer according to Claim 1, characterized in that the first material (M1) comprises a damping material.

3. Ultrasonic (US) densitometer according to Claim 1 or 2, characterized in that the second material (M2) comprises stainless steel.

4. Ultrasonic (US) densitometer according to one of Claims 1 to 5, characterized in that the frustoconical geometry of the measuring member (M) is designed with regard to a minimum generation of unwanted echo.

5. Ultrasonic (US) densitometer according to one of Claims 1 to 5, characterized in that the three elements of the measuring member (M), specifically the piezoelectric flexural resonator (1), the first part (2) and the second part (3), are respectively joined to one another by means of an industrial adhesive.

**Revendications**

1. Densimètre à ultrasons (US) pour la mesure de la densité spécifique d'un fluide, le densimètre étant réalisé sous la forme d'un corps de mesure conformé dans un canal pour le liquide à évaluer, dans lequel il est en outre prévu que le corps de mesure (M) comporte un seul transducteur d'émission/réception d'ondes ultrasonores sous la forme d'un oscillateur piézoélectrique à flexion (1), qui sert à produire un lobe d'ondes ultrasonores, qui est dirigé sur la surface du fluide à évaluer et sur une couche limite de référence, et sert à recevoir aussi bien l'écho de référence qu'un écho utile, que le corps de mesure (M) est constitué essentiellement de deux parties de forme tronconique, et dans lequel l'oscillateur piézoélectrique à flexion (1) est disposé de telle sorte qu'il s'applique par l'une de ses surfaces contre une surface conique (1/2), de préférence perpendiculaire à l'axe de rotation du corps de mesure (M) et possédant le faible diamètre d'une première partie (2) du corps de mesure (M) et, par son autre surface, contre une première surface conique (1/3) de préférence perpendiculaire à l'axe de rotation du corps de mesure (M) et possédant le faible diamètre d'une seconde partie (3) du corps de mesure (M), qu'une seconde surface conique (5), de préférence perpendiculaire à l'axe de rotation du corps de mesure (M) et possédant le grand diamètre de la seconde partie (3), est tournée vers le fluide à évaluer, qu'une seconde surface conique (4), de préférence perpendiculaire à l'axe de rotation du corps de mesure (M) et possédant le grand diamètre de la première partie (2), est tournée vers l'air ambiant, que la première partie (2) possédant une première longueur (L1) du corps de mesure (M) est formée d'un premier matériau (M1) et que la seconde partie (3), tournée vers le fluide et possédant une seconde longueur (L2), du corps de mesure (M), est formée d'un second matériau (M2), que la couche limite (4) entre le premier matériau (M1) et l'air environnant est utilisée pour produire des échos de référence ($i_{ref}$) et que le rapport des longueurs (L1,L2) est choisi de telle sorte que les échos de référence ($i_{ref}$) et les échos utiles ($i_{fluide}$) rencontrent séparément dans le temps la surface de l'oscillateur piézoélectrique à flexion (1) de telle sorte qu'ils peuvent être différenciés pour une opération d'évaluation.

2. Densimètre à ultrasons (US) suivant la revendication 1, caractérisé par le fait que le premier matériau (M1) est un matériau d'atténuation.

3. Densimètre à ultrasons (US) suivant la revendication 1 ou 2, caractérisé par le fait que le second matériau (M2) est de l'acier spécial.

4. Densimètre à ultrasons (US) suivant l'une des revendications 1 à 3, caractérisé par le fait que la géométrie tronconique du corps de mesure (M) est conçue de manière à fournir une production minimale d'échos parasites.

5. Densimètre à ultrasons (US) suivant l'une des revendications 1 à 3, caractérisé par le fait que les trois éléments du corps de mesure (M), à savoir l'oscillateur piézoélectrique à flexion (1), la première partie (2) et la seconde partie (3) sont reliés respectivement entre eux au moyen d'une colle industrielle.